# EUROPÄISCHE PATENTSCHRIFT

(11) **EP 0 883 327 B1**
(45) Veröffentlichungstag und Bekanntmachung des Hinweises auf die Patenterteilung: **08.09.2004**
(21) Anmeldenummer: 98109686.0
(22) Anmeldetag: 28.05.1998
(51) Int. Cl.: H05B 3/74, H05B 1/02

(54) **Einrichtung zur drahtlosen Ermittlung der Temperatur und einer Kennung eines Kochgeschirrs an einen Kochherd**
Arrangement for wirelessly transmitting the temperature and for detecting the presence of cookware on a cooktop
Arrangement pour la transmission sans fil de la température et pour la détection d'un récipient de cuisson sur une cuisinière

(30) Priorität: 03.06.1997 DE 19723127
(43) Veröffentlichungstag der Anmeldung: 09.12.1998
(73) Patentinhaber: Diehl AKO Stiftung & Co. KG, 88239 Wangen im Allgäu (DE)
(72) Erfinder: Wauer, Roman-Hartmut, 88353 Kisslegg (DE)
(74) Vertreter: Diehl Patentabteilung

(56) Entgegenhaltungen:
- DE-A- 3 000 593
- DE-A- 3 225 486
- DE-A- 19 502 935
- DE-U- 9 416 779
- US-A- 3 706 094

## Beschreibung

Die Erfindung betrifft eine Einrichtung zur drahtlosen Übermittlung der Temperatur und einer Kennung eines auf eine Kochzone eines Kochherdes gestellten Kochgeschirrs an eine Sende-Empfangselektronik des Kochherdes.

In der DE 195 02 935 A1 ist eine Einrichtung zur Lokalisierung eines mit einem aktiven Sender versehenen Kochgefäßes beschrieben. An der Kocheinrichtung, speziell unter deren Glaskeramikplatte, sind mehrere Antennen verteilt angeordnet, wodurch sich feststellen lassen soll, über welcher Kochstelle sich das betreffende Kochgefäß befindet. Der Sender übermittelt beispielsweise Temperaturdaten an die Kocheinrichtung, wofür er einen Temperaturfühler aufweist. Zur Spannungsversorgung des Senders ist eine Batterie oder ein Akku nötig.

In der DE 195 02 935 A1 ist davon ausgegangen, dass metallische Kochgefäße verwendet werden. Werden Kochgefäße aus einem anderen Material verwendet, ändert sich der Feldlinienverlauf beträchtlich, so dass die Positionserfassung des Kochgefäßes schwierig wird. Insbesondere ergeben sich Probleme, wenn wahlweise Kochgefäße aus Metall und Glas oder Keramik zum Einsatz kommen können sollen.

Werden bei der DE 195 02 935 A1 mehrere Kochgefäße mit Sendern gleichzeitig auf der Kocheinrichtung verwendet, dann entstehen Schwierigkeiten bei der Auswertung der einzelnen Sendersignale. Es ist deshalb vorgeschlagen, die Sender zusätzlich mit einem Empfänger auszustatten, der feststellt, ob ein benachbarten Topf zur gleichen Zeit sendet. Dadurch wird das Kochgefäß noch aufwendiger.

In der Firmenschrift der Siemens AG, München, F. Schmidt et al. "Remote sensing of physical parameters by means of passive surface acoustic wave devices ("ID-TAG")" wird die Anwendbarkeit eines Oberflächenwellensensors für die Bestimmung einer Vielzahl von Parametern, u. a. auch der Temperatur, beschrieben, wobei als mögliches Einsatzgebiet für Oberflächenwellensensoren besonders das technische Gebiet der Verkehrsüberwachung gesehen wird. Andere Anwendungsfälle sind Diebstahlsicherung und Überwachung von Zugangsberechtigungen, wie in der US-PS 3,706,094 beschrieben. Zu den Vorteilen solcher Oberflächenwellensensoren zählt, daß sie keine eigene Betriebsspannungsversorgung benötigen und daß sie eine Kodiermöglichkeit haben.

Die Patentschrift US 3,914,762 beschreibt ein Verkehrsüberwachungssystem, bei dem die erforderlichen Antennen derart ausgerichtet werden, daß deren Strahlungskeulen in eine vorbestimmte Richtung weisen, um in diesen Bereich durchfahrende Fahrzeuge anhand einer an ihnen angebrachten Kennung zu identifizieren. Es wird jedoch nicht angeregt, eine derartige Technologie bei einem Kochherd einzusetzen.

Eine andersartige Einrichtung zum Überwachen des Kochvorgangs ist in der DE 32 25 486 A1 beschrieben. Sie dient der bedarfsgerechten Leistungssteuerung der jeweiligen Kochzone. Nach der DE 32 25 486 A1 ist an einem Kochtopf eine Meßstation vorgesehen, die der Temperatur des Kochtopfes bzw. des Kochgutes entsprechende Temperatursignale an eine Abfragestation abstrahlt. Außer dem Meßwert kann die Meßstation auch ein Kennzeichen übertragen. Die Betriebsenergie für das aktive Sendeteil der Meßstation wird aus einem von der Abfragestation abgestrahlten Mikrowellen-Energiefeld gewonnen. Die am Kochtopf oder dessen Deckel anzubringende Meßstation wird, wenn sie praktisch verwirklicht wird, schon deswegen vergleichsweise groß, weil sie einen Temperaturfühler und eine Schaltung benötigt, die dem Energiefeld elektrische Energie entzieht und speichert, um über die aktiven Bauelemente Meßsignale auszusenden. Probleme bestehen auch hinsichtlich der Spülbarkeit des Kochtopfes, insbesondere wenn dieser in einer Spülmaschine gereinigt werden soll.

Die Abfragestation der DE 32 25 486 A1 ist oberhalb des Kochherdes, beispielsweise in einer Dunstabzugshaube anzuordnen. Es muß deshalb eine externe Verbindung zur Herdsteuerung geschaffen werden. Dies macht die Installation aufwendig und führt zu einem Justierzwang, weil der Sensor zielgerichtet auf die Kochzone auszurichten ist.

Aus der DE 94 16 779 U1 ist eine sensorgesteuerte Glaskeramik-Kochstelleneinheit bekannt. Diese besteht aus einem infrarotsensortauglichen Gargerät, einer Glaskeramik-Kochfläche und einer unter der Glaskeramik-Kochfläche angeordneten Strahlungsheizungsquelle. Das Gargerät korrespondiert mit einem elektronischen Zusatzgerät über eine Infrarotstrecke. Das Zusatzgerät tauscht mit einer Kochmuldenelektronik Kochdaten aus, wobei die Strahlungsheizquelle kochprozeßnah gesteuert wird. Das Zusatzgerät beansprucht Platz auf der Glaskeramik-Kochfläche und muß auf das jeweils zugeordnete Gargerät exakt ausgerichtet werden. Eine Kennung des Gargeräts ist hier nicht übertragbar.

Beim genannten Stand der Technik ist auch nachteilig, daß in die jeweilige drahtlose Übertragungsstrecke eingebrachte Gegenstände oder Beläge die Übertragung beträchtlich stören können.

Aufgabe der Erfindung ist es, eine Einrichtung der eingangs genannten Art vorzuschlagen, bei der am Kochgeschirr kein Sendeelement nötig ist, das mit einer Betriebsspannung versorgt werden muß, bei der die Kochgeschirre aus verschiedenen Materialien bestehen können, bei der außer der Temperatur auch eine kodierte Kennung von Kochgeschirreigenheiten übertragbar ist und bei der andere Gegenstände die Übertragung praktisch nicht stören.

Erfindungsgemäß ist obige Aufgabe durch die Merkmale des Anspruchs 1 gelöst.

Die erfindungsgemäße Einrichtung hat verschiedene funktionale und bauliche Vorteile:
a) Da der Abstrahlbereich der Antennenanordnung jeweils nur über eine der Kochzonen gerichtet ist, ist von vornherein eine eindeutige Zuordnung von Kochzone und Kochgeschirr gegeben.
b) Da die Antennenanordnung unterhalb der nichtmetallischen Platte, insbesondere Glaskeramikplatte, angeordnet ist, ist die übertragungsstrecke kurz, so daß kleine Sendeleistungen genügen.
c) Auf der Platte selbst wird kein Platz für die Antennenanordnung benötigt. Die gesamte Einrichtung ist - bis auf den Oberflächenwellensensor - in dem Kochherd selbst integriert.
d) Durch andere Gegenstände kann die Übertragungsstrecke kaum gestört werden.
e) Am Kochgeschirr ist kein zusätzlicher Temperaturfühler nötig, weil das Piezokristall des Oberflächenwellensensors selbst die Temperaturmeßfunktion übernimmt.
f) Der Oberflächenwellensensor dient nicht nur der einfachen Topferkennung, sondern kann eine kodierte Kennung übertragen, die Informationen über den Durchmesser, die Höhe, das Material oder den Typ des Kochgeschirrs beinhaltet.
g) Am Kochgeschirr sind sind keine aktiven elektronischen Bauteile nötig, weil der Oberflächenwellensensor ohne eigene Betriebsspannungsquelle arbeitet.
h) Die Funktionsweise ist unabhängig vom Material des Kochgeschirrs, so daß auch gemischt mit Kochgeschirr aus Metall, Keramik oder Glas gekocht werden kann.
i) Der Oberflächenwellensensor ist aufgrund seines einfachen Aufbaus leicht am Kochgeschirr anzubringen oder in diesem zu integrieren Er hält den auftretenden Temperaturen ohne weiteres stand und erfordert keine besondere Sorgfalt beim Spülen des Kochgeschirrs.
j) Bei Einsatz nur eines Sensors ist dieser zentral im heißen Bereich der Kochzone angeordnet.
k) Der Sensor dient gleichzeitig zur Temperaturerfassung.
l) Bei drei Sensoren sind diese symmetrisch um die Kochzone angeordnet und erkennen aus der veränderten Weglänge eines Sensorstrahles einen Topfversatz.
m) Die Sensoren können nachgerüstet, nämlich nachträglich angeklebt werden.
n) Der Reflektor ist im Prinzip energielos und ändert sein Verhalten bei Temperaturänderung. Er reflektiert veränderte Signale, die der Sensor auswertet.

Vorteilhafte Ausgestaltungen der Erfindung ergeben sich aus den Unteransprüchen und der folgenden Beschreibung. In der Zeichnung zeigen.
Figur 1 ein Kochgeschirr auf einer der Kochzonen einer Glaskeramikplatte schematisch,
Figur 2 eine Aufsicht der Einrichtung nach Figur 1,
Figur 3 einen Oberflächenwellensensor in den Boden eines Kochgeschirrs integriert,
Figur 4 einen Oberflächenwellensensor an einem Griff eines Kochgeschirrs,
Figur 5 ein Blockschaltbild der Einrichtung und
Figur 6 ein Impulsdiagramm.

Ein Kochherd bzw. eine Kochmulde weist eine Glaskeramikplatte 1 auf, an der mehrere Kochzonen 2 vorgesehen sind. In den Figuren ist nur eine Kochzone 2 gezeigt. Unter jeder Kochzone 2 ist eine Strahlungsbeheizung 3 angeordnet, deren Leistung von einer nicht näher dargestellten Steuerelektronik steuer- bzw. regelbar ist.

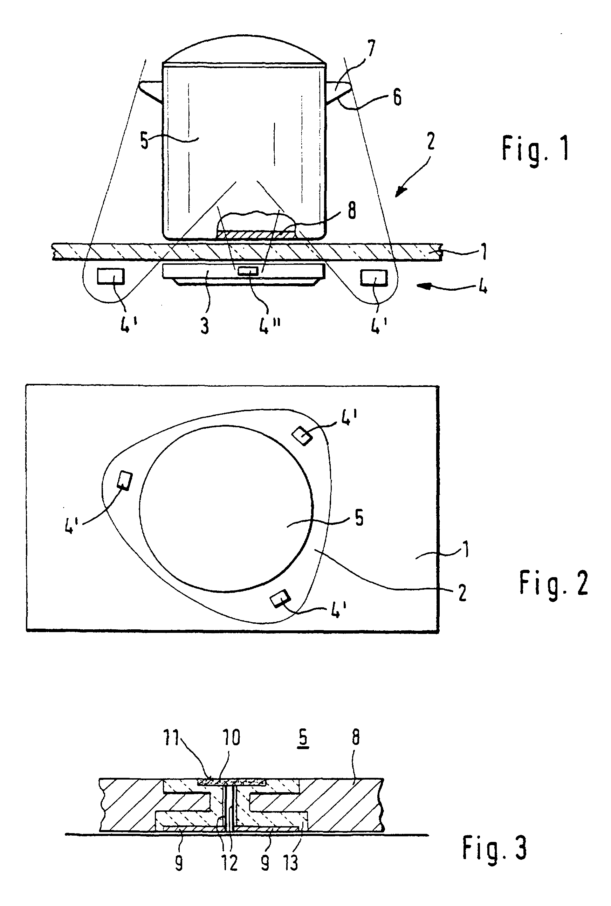

Unter der Glaskeramikplatte 1 ist bei der Kochzone 2 eine Antennenanordnung 4 installiert. Die Figur 1 zeigt zwei Ausführungsbeispiele für die Antennenanordnung 4. Bei der einen Antennenanordnung sind drei Antennen 4' um die Strahlungsbeheizung 3 verteilt angeordnet. Bei der anderen Antennenanordnung ist eine Antenne 4'' zentral zur Strahlungsbeheizung 3 vorgesehen. In beiden Fällen ist der Abstrahlbereich der Antennen 4',4'' so gestaltet, daß er auf den Raum beschränkt ist, auf dem sich ein auf die Kochzone 2 aufgestelltes Kochgeschirr 5 befinden kann. Die Antennen strahlen einen hochfrequenten Impuls im Mikrowellenbereich mit einer Frequenz von etwa 0,8 bis 3 GHz ab. Die Austrahlungscharakteristik entspricht etwa der eines Lichtkegels (vgl. Fig.1, Fig.2).

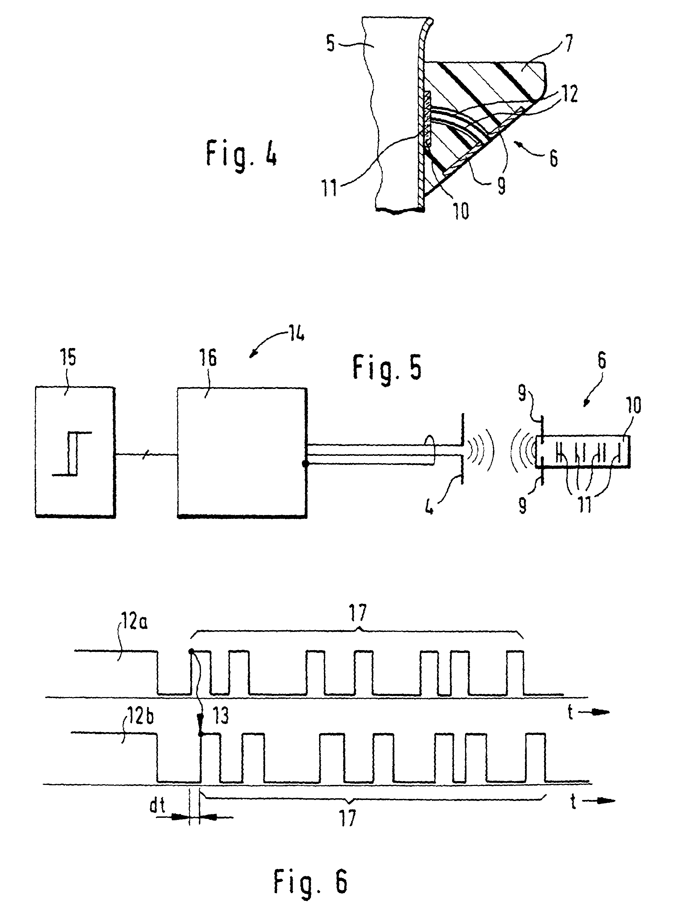

Die Antennenanordnung mit den drei Antennen 4' ist für den Fall vorgesehen, daß das Kochgeschirr 5 einen Oberflächenwellensensor 6 in seinem Griff 7 trägt (vgl. Fig.4). Die drei Antennen 4' bilden gemeinsam einen Abstrahlungsbereich, der den Griff 7 in seinen möglichen Stellungen erfaßt. Im Bedarfsfall können auch mehr als drei Antennen um die Strahlungsbeheizung 3 angeordnet sein.

Die zentrale Antenne 4'' ist dann vorgesehen, wenn ein Kochgeschirr 5 verwendet wird, bei dem der Oberflächenwellensensor 6 in den Boden 8 des Kochgeschirrs 5 integriert ist (vgl. Fig.3).

Der Oberflächenwellensensor 6 weist eine Dipolantenne 9, ein plättchenförmiges Piezokristall 10 und auf diesem Reflektoren 11 auf. Die räumliche Anordnung der Reflektoren 11 beinhaltet eine Kodierung (vgl. Fig.5). Diese Kodierung kann entsprechend dem Durchmesser, der Höhe, des Typs oder ähnliche Eigenschaften des Kochgeschirrs 5 gewählt sein.

Bei der Ausführung nach Figur 3 ist das Piezokristall 10 an der Innenseite des Bodens 8 des Kochgeschirrs 5 angeordnet, so daß es direkt der Temperatur des Kochgutes ausgesetzt ist. Die Dipolantenne 9 liegt außen am Boden 8, im Abstrahlungsbereich der Antenne 4''. Die Dipolantenne 9 ist über elektrische Leiter 12 an das Piezokristall 10 angeschlossen. Der Oberflächenwellensensor 6 ist im Boden 8 in eine thermisch beständige, elektrisch nichtleitende und mechanisch dichte Isolierschicht 13 eingebettet.

Bei der Ausführung nach Figur 4 liegt der Piezokristall 10 in elektrisch leitender Verbindung mit der äußeren Oberfläche des Kochgeschirrs 5 im Bereich des Griffes 7. Die Dipolantenne 9 ist außen in den Griff 7 integriert. Die elektrischen Leiter 12 verlaufen im Griff 7.

Unter der Glaskeramikplatte 1 ist eine Sende-Empfangselektronik 14 angeordnet, die eine Senderschaltung 15 und eine Auswerteschaltung 16 aufweist. Die Senderschaltung 15 gibt in gewissen zeitlichen Abständen einen Mikrowellenimpuls an die Antennenanordnung 4. Dieser Impuls wird von der Dipolantenne 9 des auf die Kochzone 2 aufgestellten Kochgeschirrs 5 empfangen. Der Impuls führt zu einer Schallwelle am Piezokristall 10. Diese Schallwelle wirkt auf die Reflektoren 11, die mit der Dipolantenne 9 gekoppelt sind und an dieser ein ihrer Lage gegenüber der Dipolantenne 9 entsprechendes Signalmuster hervorrufen. Dieses Signalmuster wird von Antennenanordnung 4 erfaßt und der Auswerteschaltung 16 zu einem Impulsmuster verarbeitet. Zwei solcher Impulsmuster sind in Figur 6 dargestellt. Die beiden Impulsmuster sind in den zeitlichen Abständen der sieben Einzelimpulse 17 gleich, wobei die zeitlichen Abstände der Einzelimpulse 17 den räumlichen Abständen der sieben Reflektoren 11 (vgl. Fig.5) entsprechen. Andere Abstände der Reflektoren 11 würden zu anderen Impulsmustern führen. Die Auswerteschaltung 16 kann also durch Auswertung der Abstände der Einzelimpulse 17 die Reflektorenanordnung und damit die Kodierung erkennen.

Da die Ausbreitung der Schallwellen im Piezokristall 10 abhängig von dessen Temperatur ist, ergibt sich bei unterschiedlichen Temperaturen eine Phasenverschiebung dt zwischen den Impulsmustern. Diese Phasenverschiebung dt ist in Figur 6 dargestellt. Aus dieser Phasenverschiebung dt erhält die Auswerteschaltung 16 eine Information über die am oder im Kochgeschirr 5 herrschende Temperatur. Die Auswerteschaltung 16 gibt das ermittelte Temperatursignal, gegebenenfalls verknüpft mit der Kennung des Kochgeschirrs 5 an die genannte Steuerelektronik der Strahlungsbeheizung 3, um deren Leistung jeweils bedarfsgerecht einzustellen.

Der Oberflächenwellensensor 6 kann auch an der Außenseite des Kochgeschirrs 5 befestigt sein. Hierfür eignet sich beispielsweise eine Haftschicht, beispielsweise in Form eines Haftetiketts. Damit ist es möglich, den Oberflächenwellensensor 6 auch nachträglich an einem Kochgeschirr 5 anzubringen. Es können für den Kochbetrieb unter Ausnutzung der Vorteile der beschriebenen Einrichtung damit auch solche Kochgeschirre verwendet werden, die ohnehin vorhanden sind.

## Patentansprüche

1. Einrichtung zur drahtlosen Übermittlung der Temperatur und einer Kennung eines auf eine Kochzone (2) eines Kochherdes gestellten Kochgeschirrs an eine Sende- und Empfangselektronik (14) des Kochherdes,
wobei eine Antennenanordnung (4) der Sende-Empfangselektronik (14) bei der Kochzone (2) unter deren nichtmetallischer Platte (1) derart angeordnet ist, dass ihr Abstrahlungsbereich auf den Raum beschränkt ist, in dem sich ein auf diese Kochzone(2) aufgestelltes Kochgeschirr (5) befindet,
wobei die Sende-Empfangselektronik (14) einen elektromagnetischen Sendeimpuls erzeugt,
wobei am Kochgeschirr (5) ein Oberflächenwellensensor (6) angeordnet ist, der eine Antenne (9), ein Piezokristall (10) und Reflektoren (11) aufweist,
wobei das Piezokristall (10) der Temperatur des Kochgutes oder des Kochgeschirrs(5) ausgesetzt ist und die Kennung des Kochgeschirrs (5) in der Anordnung der Reflektoren (11) verkörpert ist,
und wobei die Sende-Empfangselektronik (14) die von der Antenne (9) des Oberflächenwellensensors(6) reflektierten Impulse auswertet.

2. Einrichtung nach Anspruch 1,
**dadurch gekennzeichnet,**
**dass** die Antennenanordnung (4) aus wenigstens drei um die Kochzone (2) angeordneten Antennen (4') besteht.

3. Einrichtung nach Anspruch 1,
**dadurch gekennzeichnet,**
**dass** die Antennenanordnung (4) etwa in der Mitte der Kochzone (2) angeordnet ist.

4. Einrichtung nach einem der vorhergehenden Ansprüche,
**dadurch gekennzeichnet,**
**dass** der Oberflächenwellensensor (6) am Rand oder an einem Griff (7) des Kochgeschirrs(5) angeordnet ist, wobei das Piezokristall (10) mit dem Kochgeschirr(5) in wärmeleitender Verbindung steht.

5. Einrichtung nach einem der Ansprüche 1 bis 3,
**dadurch gekennzeichnet,**
**dass** der Oberflächenwellensensor(6) in den Boden (8) des Kochgeschirrs (5) eingebaut ist, wobei das Piezokristall (10) innen und die Antenne (9) außen am Boden (8) liegt

6. Einrichtung nach Anspruch 5,
**dadurch gekennzeichnet,**
**dass** der Oberflächenwellensensor (6) am Boden (8) in eine thermisch beständige, elektrisch nicht leitende Isolierschicht (13) eingebaut ist.

7. Einrichtung nach einem der vorhergehenden Ansprüche,
**dadurch gekennzeichnet,**
**dass** der Oberflächenwellensensor (6) außen am Kochgeschirr (5) befestigt ist.

8. Einrichtung nach einem der vorhergehenden Ansprüche,
**dadurch gekennzeichnet,**
**dass** das Kochgeschirr (5) aus Metall, Glas oder Keramik besteht.

## Claims

1. A device for the wireless transmission of the temperature and of an identification code in respect of a cooking vessel located on a cooking zone (2) of a cooker to transmitting and receiving electronics (14) of said cooker,
in which an antenna arrangement (4) of the transmitting/receiving electronics (14) is disposed close to the cooking zone (2) underneath its non-metallic plate (1) in such a way that its radiation range is restricted to the space occupied by a cooking vessel (5) on said cooking zone (2),
in which the transmitting/receiving electronics (14) produce an electromagnetic transmission pulse,
in which a surface wave sensor (6) is disposed on the cooking vessel (5) and comprises an antenna (9), a piezoelectric crystal (10) and reflectors (11),
in which the piezoelectric crystal (10) is exposed to the temperature of the food being cooked or of the cooking vessel (5) and the identification code of the cooking vessel (5) is embodied in the arrangement of the reflectors (11)
and in which the transmitting/receiving electronics (14) evaluate the pulses reflected from the antenna (9) of the surface wave sensor (6).

2. A device according to Claim 1,
**characterized in that**
the antenna arrangement (4) consists of at least three antennas (4') disposed around the cooking zone (2).

3. A device according to Claim 1,
**characterized in that**
the antenna arrangement (4) is located approximately in the middle of the cooking zone (2).

4. A device according to one of the preceding claims,
**characterized in that**
the surface wave sensor (6) is located on the edge or on a handle (7) of the cooking vessel (5), the piezoelectric crystal (10) being in heat-conducting communication with the cooking vessel (5).

5. A device according to one of Claims 1 to 3,
**characterized in that**
the surface wave sensor (6) is incorporated into the base (8) of the cooking vessel (5), the piezoelectric crystal (10) being located on the inside and the antenna (9) on the outside of said base (8).

6. A device according to Claim 5,
**characterized in that**
the surface wave sensor (6) is incorporated into the base (8) in a thermally stable, electrically nonconductive insulating layer (13).

7. A device according to one of the preceding claims,
**characterized in that**
the surface wave sensor (6) is fixed on to the outside of the cooking vessel (5).

8. A device according to one of the preceding claims,
**characterized in that**
the cooking vessel (5) is made of metal, glass or ceramic.

## Revendications

1. Dispositif pour la transmission sans fil de la température et d'une caractéristique d'un ustensile de cuisson placé sur une zone de cuisson (2) d'une cuisinière, à une électronique d'émission et de réception (14) de la cuisinière, dans lequel un ensemble d'antennes (4) de l'électronique d'émission-réception (14) est disposé dans la zone de cuisson (2) au-dessous de sa plaque (1) non métallique, de manière que son domaine de rayonnement soit limité à l'espace dans lequel se trouve un ustensile de cuisson (5) placé sur cette zone de cuisson (2), dans lequel l'électronique d'émission-réception (14) produit une impulsion électromagnétique d'émission, dans lequel sur l'ustensile de cuisson (5) est disposé un capteur d'ondes de surface (6) qui comporte une antenne (9), un piézocristal (10) et des réflecteurs (11), dans lequel le piézocristal (10) est exposé à la température du produit à cuire ou de l'ustensile de cuisson (5), et la caractéristique de l'ustensile de cuisson (5) est matérialisée dans la disposition des réflecteurs (11), et dans lequel l'électronique d'émission-réception (14) exploite les impulsions réfléchies par l'antenne (9) du capteur d'ondes de surface (6).

2. Dispositif selon la revendication 1, **caractérisé en ce que** l'ensemble d'antennes (4) est constitué d'au moins trois antennes (4') disposées autour de la zone de cuisson (2).

3. Dispositif selon la revendication 1, **caractérisé en ce que** l'ensemble d'antennes (4) est disposé approximativement au milieu de la zone de cuisson (2).

4. Dispositif selon l'une des revendications précédentes, **caractérisé en ce que** le capteur d'ondes de surface (6) est disposé sur le bord ou sur une poignée (7) de l'ustensile de cuisson (5), le piézocristal (10) étant en liaison conductrice thermique avec l'ustensile de cuisson (5).

5. Dispositif selon l'une des revendications 1 à 3, **caractérisé en ce que** le capteur d'ondes de surface (6) est intégré au fond (8) de l'ustensile de cuisson (5), le piézocristal (10) se situant à l'intérieur et l'antenne (9) à l'extérieur sur le fond (8).

6. Dispositif selon la revendication 5, **caractérisé en ce que** le capteur d'ondes de surface (6) est intégré au fond (8) dans une couche isolante (13) résistante thermiquement, non conductrice électriquement.

7. Dispositif selon l'une des revendications précédentes, **caractérisé en ce que** le capteur d'ondes de surface (6) est fixé à l'extérieur sur l'ustensile de cuisson (5).

8. Dispositif selon l'une des revendications précédentes, **caractérisé en ce que** l'ustensile de cuisson (5) est en métal, en verre ou en céramique.
